# EUROPÄISCHE PATENTSCHRIFT

(11) **EP 0 353 612 B1**
(45) Veröffentlichungstag und Bekanntmachung des Hinweises auf die Patenterteilung: **02.03.1994**
(21) Anmeldenummer: 89113778.8
(22) Anmeldetag: 26.07.1989
(51) Int. Cl.: F16H 7/18, F01L 1/02

(54) **Mehrfach gelagerte Führungsschiene für endlose Zugmittelgetriebe**
Guide rail with multiple supports for endless traction mechanism gearings
Barre de guidage à supports multiples, pour transmission à lien continu flexible

(30) Priorität: 30.07.1988 DE 3826015
(43) Veröffentlichungstag der Anmeldung: 07.02.1990
(73) Patentinhaber: Bayerische Motoren Werke Aktiengesellschaft, 80788 München (DE)
(72) Erfinder: Walther, Gerhard, D-8070 Ingolstadt (DE); Gassmann, Klaus, D-7073 Lorch (DE)

(56) Entgegenhaltungen:
- DE-C- 3 417 099
- GB-A- 542 759

## Beschreibung

Die Erfindung betrifft eine mehrfach gelagerte Führungsschiene für endlose Zugmittelgetriebe. Eine gattungsbildende Gleitschiene für Kettenantriebe ist in der DE-C-34 17 099 beschrieben.

Aus Geräusch- und Schwingungsgründen werden in zunehmendem Maße insbesondere Kettentriebe in nahezu vollständig geschlossenen, zumindest jedoch einen U-förmigen Querschnitt aufweisenden Führungsschienen geführt. Oftmals erstrecken sich diese einteiligen Führungsschienen über eine relativ große Länge und sind dabei an mehreren Punkten eines beispielsweise Maschinengehäuses fixiert. Bei den Steuerketten von Brennkraftmaschinen sind bis zu 40 cm lange Führungsschienen bekanntgeworden, welche am geteilten Maschinengehäuse, namentlich mit zwei Lagerstellen am Kurbelgehäuse sowie einer weiteren Lagerstelle am Zylinderkopf der Brennkraftmaschine befestigt sind.

Aufgrund der relativ großen Abstände sowie aufgrund der Verschraubung an unterschiedlichen Bauteilen können sich an den Lagerstellen relativ große Toleranzen einstellen. Bekannt ist der in der Ebene des Kettentriebes durch Langlöcher an den Lagerstellen zu bewerkstelligende Toleranzausgleich. Quer zu jener Ebene wurden die Führungsschienen bislang zumeist lediglich verspannt.

Die o.g. Schrift vor schlägt, eine Führungsschiene quer zur Ebene des Kettentriebes schwimmend zu lagern, wobei innerhalb des möglichen Verschiebeweges die Schiene elastisch auf eine Soll-Stellung fixiert sein soll.

Aufgabe der Erfindung ist es, Maßnahmen aufzuzeigen, mit Hilfe derer eine gattungsgemäße Führungsschiene auf einfache Weise verspannungslos und dennoch starr gelagert werden kann.
Diese Aufgabe wird durch die kennzeichnenden Merkmale der unabhängigen Ansprüche gelöst; besonders vorteilhaft ist es dabei, die Merkmale der Ansprüche miteinander zu kombinieren.

Gemäß Anspruch 1 ist zumindest ein Lager sozusagen selbsteinstellend ausgebildet. Dieser Einstellvorgang wird bei der Montage durch Einwirken des Befestigungsmittels ausgelöst. Vorgesehen ist hierzu eine in eine Aufnahmeöffnung der Führungsschiene eingesetzte, beispielsweise von einer in das Maschinengehäuse einzudrehenden Schraube durchdrungene Führungshülse, welche letztendlich eine form- oder reibschlüssige Verbindung zwischen der Schraube bzw. dem Befestigungsmittel und der Führungsschiene herstellt. Vorteilhafterweise läßt sich diese Anordnung unter Berücksichtigung wirtschaftlicher Aspekte auf einfache Weise fertigen sowie montieren. Sind dabei insgesamt mindestens vier Lagerstellen für die Führungsschiene vorgesehen, so empfiehlt es sich, zumindest zwei Lager erfindungsgemäß zu gestalten.

Ein derartiges Lagerprinzip mit einer Führungshülse ist aus der GB-A- 542 759 zwar allgemein bekannt, jedoch ist die beanspruchte Ausgestaltung für den spetiellen Anwendung fall besonders günstig. Dabei empfiehlt es sich stets, die Führungshülse aus einem relativ leicht verformbaren Werkstoff zu fertigen. Unter der pressenden Einwirkung des Befestigungsmittels (beispielsweise des Schraubenkopfes) paßt sich die Führungshülse dann der Kontur der Aufnahmeöffnung an. Als bevorzugter Werkstoff sei beispielsweise Gummi, aber auch Messing genannt.

Eine andere Lösung der Aufgabe vorliegender Erfindung ist im zweiten und dritten Anspruch angegeben. Danach sind zumindest ein Lager bzw. wesentliche Bestandteile eines Lagers aus einem Werkstoff gefertigt, welcher bei der Montage der Führungsschiene elastische Eigenschaften aufweist, im Anschluß daran jedoch selbsttätig erstarrt. Aufgrund dieses selbsttätigen Toleranzausgleiches wird der Montagevorgang deutlich vereinfacht. Bei entsprechender geometrischer Auslegung ist es hiermit sogar möglich, neben dem Toleranzausgleich quer zur Ebene des Kettentriebes auch einen Toleranzausgleich in der Kettentriebebene zu erzielen.

Der Erstarrvorgang des Lagermaterials kann aufgrund unterschiedlichster Einflüsse, so beispielsweise durch alleiniges zeitliches Aushärten, erfolgen. Insbesondere bei der Anwendung an Brennkraftmaschinen ist es jedoch vorteilhaft, wenn der Erstarrvorgang gemäß Anspruch 4 durch eine Temperaturänderung ausgelöst wird. In diesem Falle wird die Führungsschiene bei zunächst kalter Brennkraftmaschine montiert. Beim ersten Probelauf erwärmt sich das Gehäuse der Brennkraftmaschine in einem solchen Maße, daß der Lagerwerkstoff allein unter Einfluß der Strahlungswärme des Maschinengehäuses aushärtet bzw. erstarrt. Alternativ ist es jedoch auch denkbar, die Erstarrung durch extreme Abkühlung in Gang zu setzen. Neben den verschiedensten Werkstoffen mit den geforderten Eigenschaften (beispielsweise Zweikomponenten-Kunststoffe) kommt nach Anspruch 5 als Lagerwerkstoff ein Acryl-Nitril-Butatin-Kautschuk zur Anwendung.

Weiterhin ist es möglich, anstelle der Führungshülsen einen an der Führungsschiene oder am Maschinengehäuse vorgesehenen Lagerlappen oder ähnlich gestaltete Lagerungsmöglichkeiten in ihrer Gesamtheit in dem selbsttätig erstarrenden Werkstoff auszubilden.

An dieser Stelle soll ausdrücklich darauf hingewiesen werden, daß das Erstarren nur vorzugsweise einen irreversiblen Vorgang darstellt. Dies bedeutet, daß das einmal erstarrte bzw. erhärtete Lagermaterial für die restliche Betriebsdauer in jenem erstarrten bzw. erhärteten Zustand verbleibt. Alternativ ist es jedoch auch möglich, den Erstarrungsprozeß quasi reversibel zu gestalten. Dies ist insbesondere bei einem durch Temperaturänderung ausgelösten Erstarrungsvorgang von Vorteil, da es hiermit bei geeigneter Auslegung sämtlicher Randbedingungen möglich ist, neben den fertigungsbedingten Bauteiltoleranzen zusätzlich sich einstellende Wärmedehnungstoleranzen der einzelnen Bauteile auszugleichen.

Im folgenden wird die Erfindung anhand eines bevorzugten Ausführungsbeispiels näher beschrieben. Es zeigt:
- Fig. 1: in einer Prinzipskizze einen Kettentrieb mit einer erfindungsgemäß gelagerten Führungsschiene, sowie
- Fig. 2: den Schnitt A-A durch ein erfindungsgemäß gestaltetes Lager in einem ersten Ausführungsbeispiel, sowie
- Fig. 3: den Schnitt A-A in einem zweiten Ausführungsbeispiel.

Eine Brennkraftmaschine 1 besteht aus einem Kurbelgehäuse 2 sowie einem Zylinderkopf 3. Im Kurbelgehäuse ist eine an ihrem stirnseitigen Ende mit einem Kettenrad 4 versehene Kurbelwelle gelagert, im Zylinderkopf eine, ebenfalls ein Kettenrad 5 aufweisende Nockenwelle. Die Bewegungsübertragung zwischen Kettenrad 4 und Kettenrad 5 erfolgt mittels einer Steuerkette 6, welche bereichsweise innerhalb einer einen kastenförmigen Querschnitt aufweisenden Führungsschiene 7 geführt ist. Da die Führungsschiene 7 relativ lang ausgebildet ist, ist sie an drei Stellen gelagert. Die beiden Lagerstellen 8a, 8b befinden sich am Kurbelgehäuse 2, die dritte Lagerstelle 8c am Zylinderkopf 3. Ausgebildet sind diese Lagerstellen 8 als sog. Lagerlappen 9, welche an das kastenförmige Profil der Führungsschiene 7 angeformt sind und eine Aufnahmeöffnung 10 zur Aufnahme eines Befestigungsmittels 11 in Form einer in das Kurbelgehäuse 2 bzw. den Zylinderkopf 3 eingedrehten Schraube aufweisen.

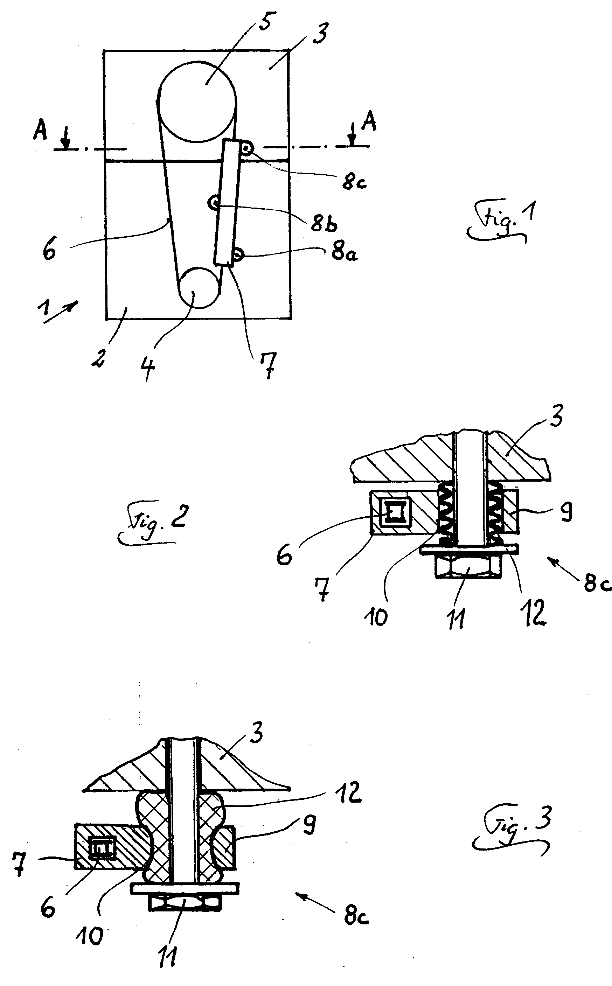

Die gezeigte Führungsschiene 7 erstreckt sich nahezu vom Kettenrad 4 zum Kettenrad 5 und weist somit eine relativ große Länge auf. Da sich desweiteren die Lagerstelle 8c an einem anderen Bauteil befindet als die übrigen Lagerstellen 8a, 8b, können Fertigungstoleranzen zu einer unzulässigen Verspannung der Führungsschiene 7 führen. Während für den Toleranzausgleich in der Ebene der Steuerkette 6 die Aufnahmeöffnungen 10 in den Lagerlappen 9 beispielsweise langlochförmig ausgebildet sein können, ist für den Toleranzausgleich quer zu jener Ebene bevorzugt die Lagerstelle 8c gemäß Fig. 2 oder Fig. 3 ausgebildet.

Im ersten Ausführungsbeispiel (Fig. 2) ist in die zylindrisch ausgebildete Aufnahmeöffnung 10 der Lagerstelle 8c eine Führungshülse 12 eingesetzt, welche ihrerseits mittels des sie durchdringenden Befestigungsmittels 11 am Zylinderkopf 3 angeschraubt ist. Wie gezeigt, weist die Führungshülse ein Wellprofil auf und ist aus Messing gefertigt. Beim Montagevorgang verformt der Schraubenkopf (Befestigungsmittel 11) diese eingesetzte Führungshülse derart, daß eine reibschlüssige Verbindung zwischen dem Befestigungsmittel sowie der Führungsschiene hergestellt ist. Somit bildet die Lagerstelle 8c ein vollwertiges Lager, welches sich jedoch erfindungsgemäß während des Montagevorganges an die vorliegenden toleranzbehafteten geometrischen Verhältnisse anpaßt. Neben dieser Ausbildung kann die Führungshülse aber auch beispielsweise aus Gummi gefertigt sein und ähnlich der Darstellung in Fig. 3 eine formschlüssige Verbindung zwischen dem Befestigungsmittel sowie der Führungsschiene herstellen. Auch kann die Innenwand der Aufnahmeöffnung (10) ebenfalls ein Well- bzw. Verzahnungsprofil aufweisen.

Alternativ (Fig. 3) ist die in die wulstförmig ausgebildete Aufnahmeöffnung 10 eingesetzte Führungshülse 12 aus einem Acryl-Nitril-Butatin-Kautschuk gefertigt. Dieses Material weist beim Montagevorgang der Führungsschiene 7 ein elastisches Verhalten auf und gewährleistet somit den erforderlichen Toleranzausgleich. Sowohl in der Ebene der Steuerkette 6 als auch quer zu dieser Ebene paßt sich die Führungshülse 12 in ihrer Außenkontur aufgrund ihrer elastischen Eigenschaften den Konturen der wulstförmig ausgebildeten Aufnahmeöffnung 10 an. Beim ersten Probelauf der Brennkraftmaschine 1 erwärmt sich das Kurbelgehäuse 2 sowie der Zylinderkopf 3 in einem solchen Maße, daß der Werkstoff der Führungshülse 12 unter dem Einfluß dieser Strahlungswärme erstarrt bzw. aushärtet. Nachdem somit die Führungshülse 12 ihre elastische Eigenschaft verloren hat, bildet die Lagerstelle 8c ein vollwertiges Lager, welches in der Lage ist, die auftretenden Kräfte aufzunehmen.

Selbstverständlich bleibt die Erfindung nicht auf das gezeigte Ausführungsbeispiel beschränkt. So kann die Aufnahmeöffnung 10 der Lagerstelle 8b anstelle der wulstförmigen Ausbildung beispielsweise auch einen kegelförmigen Querschnitt aufweisen. Auch ist es möglich, den Lagerlappen 9 selbst aus einem zunächst elastischen, später jedoch erstarrenden Material zu fertigen. Wesentlich ist vielmehr der allgemeine Erfindungsgedanke.

## Patentansprüche

1. Führungsschiene (7), die über mehrere Lager (8a, 8b, 8c) gelagert ist und die ein Zugmittel eines endlosen Zugmittelgetiebes führt, insbesondere für die Steuerkette (6) einer Brennkraftmaschine (1), wobei bei zumindest einem Lager (8c) ein Befestigungsmittel (11) eine Aufnahmeöffnung (10) der Führungsschiene (7) durchdringt und die Führungsschiene (7) an einem festen Gehäuseteil (Zylinderkopf 3) haltert,
dadurch gekennzeichnet, daß in die Aufnahmeöffnung (10) eine vom Befestigungsmittel (11) durchdrungene Führungshülse (12) eingesetzt ist, die sich beim Montagevorgang unter Einwirkung des Befestigungsmittels (11) derart verformt, daß sich zwischen Führungshülse (12) und Führungsschiene (7) eine formschlüssige oder reibschlüssige Verbindung bildet, wozu die Aufnahmeöffnung (10) und/oder die Führungshülse (12) von nichtzylindrischer Form sind ist.

2. Führungsschiene (7), die über mehrere Lager (8a, 8b, 8c) gelagert ist und die ein Zugmittel eines endlosen Zugmittelgetiebes führt, insbesondere für die Steuerkette (6) einer Brennkraftmaschine (1), wobei bei zumindest einem Lager (8c) ein Befestigungsmittel (11) eine Aufnahmeöffnung (10) der Führungsschiene (7) durchdringt und die Führungsschiene (7) an einem festen Gehäuseteil (Zylinderkopf 3) haltert,
dadurch gekennzeichnet, daß in die Aufnahmeöffnung (10) eine vom Befestigungsmittel (11) durchdrungene Führungshülse (12) eingesetzt ist, die aus einem beim Montagevorgang elastische Eigenschaften aufweisenden, anschließend selbsttätig erstarrenden Werkstoff besteht.

3. Führungsschiene (7), die über mehrere Lager (8a, 8b, 8c) gelagert ist und die ein Zugmittel eines endlosen Zugmittelgetiebes führt, insbesondere für die Steuerkette (6) einer Brennkraftmaschine (1), wobei bei zumindest einem Lager (8c) ein Befestigungsmittel (11) einen Lagerlappen (9) der Führungsschiene (7) durchdringt und die Führungsschiene (7) an einem festen Gehäuseteil (Zylinderkopf 3) haltert,
dadurch gekennzeichnet, daß der Lagerlappen (9) aus einem beim Montagevorgang elastische Eigenschaften aufweisenden, anschließend selbsttätig erstarrenden Werkstoff besteht.

4. Führungsschiene nach Anspruch 2 oder 3,
dadurch gekennzeichnet, daß der Erstarr-Vorgang durch Temperaturänderung ausgelöst wird.

5. Führungsschiene nach einem der Ansprüche 2 bis 4, dadurch gekennzeichnet, daß als selbsttätig erstarrender Werkstoff ein Acryl-Nitril-Butatin-Kautschuk (NBR) zur Anwendung kommt.

6. Führungsschiene nach Anspruch 1,
dadurch gekennzeichnet, daß die Aufnahmeöffnung (10) und/oder die Führungshülse (12) ein Wellprofil aufweist.

## Claims

1. A guide rail (7) mounted on a number of bearings or supports (8a, 8b, 8c) and guiding a traction means in an endless traction gear unit, more especially for the timing chain (6) of an internal combustion engine (1) and, in the case of at least one bearing or support (8c), a securing means (11) extends through and is received in an opening (10) in the guide rail (11) and secures the rail to a fixed part of the casing (cylinder head 3), characterised in that a guide sleeve (12) through which the securing means (11) extends is inserted in the opening (10) and, during the assembly process, is deformed by the securing means (11) so as to produce a positive or frictional connection between the guide sleeve (12) and the guide rail (7), the opening (10) and/or the guide sleeve (12) being non-cylindrical.

2. A guide rail (7) mounted on a number of bearings or supports (8a, 8b, 8c) and guiding a traction means in an endless traction gear unit, more especially for the timing chain (6) of an internal combustion engine (1) and, in the case of at least one bearing or support (8c), a securing means (11) extends through and is received in an opening (10) in the guide rail (11) and secures the rail to a fixed part of the casing (cylinder head 3), characterised in that a guide sleeve (12) through which the securing means (11) extends is inserted in the opening (10) and is made of a material which has resilient properties during the assembly process and hardens automatically later.

3. A guide rail (7) mounted on a number of bearings or supports (8a, 8b, 8c) and conveying a traction means in an endless traction gear unit, more especially for the timing chain (6) of an internal combustion engine (1) and, in the case of at least one bearing or support (8c), a securing means (11) extends through a lug (9) on the guide rail (7) and secures it to a fixed part of the casing (cylinder head 3), characterised in that the lug (9) is made of a material which has resilient properties during the assembly process and subsequently sets automatically.

4. A guide rail according to claim 2 or 3, characterised in that the setting process is initiated by a change of temperature.

5. A guide rail according to any of claims 2 to 4, characterised in that the automatically setting material is an acryl-nitrile-butadiene rubber (NBR).

6. A guide rail according to claim 1,
characterised in that the opening (10) and/or the guide sleeve (12) have/has a corrugated cross-section.

## Revendications

1. Barre de guidage (7) montée sur plusieurs paliers (8a, 8b, 8c) et assurant le guidage de l'organe actif d'une transmission par traction à lien continu flexible, en particulier la chaîne de distribution (6) d'un moteur à combustion interne (1), l'un au moins des paliers (8c) comportant un moyen de fixation (11) traversant une ouverture de réception (10) de la barre de guidage (7) dont il assure la fixation sur une partie fixe du bloc moteur (culasse 3), caractérisée en ce que l'ouverture de réception (10) sert de logement à une douille de guidage (12) traversée par le moyen de fixation (11), la douille (12) étant, au cours du montage, déformée par l'action du moyen de fixation (11) de manière que s'établisse entre la douille de guidage (12) et la barre de guidage (7) une liaison par combinaison de forme ou par frottement, l'ouverture de réception (10) et/ou la douille de guidage (12) n'ayant pas une forme cylindrique.

2. Barre de guidage (7), montée sur plusieurs paliers (8a, 8b, 8c) et assurant le guidage de l'organe actif d'une transmission par traction à lien continu flexible, en particulier la chaîne de distribution (6) d'un moteur à combustion interne (1), un palier (8c) au moins comportant un moyen de fixation (1) traversant une ouverture de réception (10) de la barre de guidage dont il assure la fixation sur une partie fixe du bloc moteur (culasse 3), caractérisée en ce que l'ouverture de réception (10) sert de logement à une douille de guidage (12) traversée par le moyen de fixation (11), cette douille étant faite d'un matériau élastique au moment du montage, mais se rigidifiant automatiquement ensuite.

3. Barre de guidage (7), montée sur plusieurs paliers (8a, 8b, 8c) et assurant le guidage de l'organe actif d'une transmission par traction à lien continu flexible, en particulier la chaîne de distribution (6) d'un moteur à combustion interne (1), un palier (8c) au moins comportant un moyen de fixation (1) traversant une patte de support (9) de la barre de guidage (7) dont il assure la fixation sur une partie fixe du bloc moteur (culasse 3), caractérisée en ce que la patte de support (9) est faite d'un matériau élastique au moment du montage, mais se rigidifiant automatiquement ensuite.

4. Rail de guidage selon la revendication 2 ou 3, caractérisé en ce que le processus de rigidification est déclenché par modification de la température.

5. Rail de guidage selon l'une des revendications 2 à 4, caractérisé en ce que le matériau à rigidification automatique utilisé est un caoutchouc d'acrylonitrilebutadiène (NBR).

6. Rail de guidage selon la revendication 1, caractérisé en ce que l'ouverture de réception (10) et/ou la douille de guidage présente(nt) un profil en accordéon.
